# EUROPÄISCHE PATENTSCHRIFT

(11) **EP 2 893 389 B1**
(45) Veröffentlichungstag und Bekanntmachung des Hinweises auf die Patenterteilung: **28.09.2016**
(21) Anmeldenummer: 13756910.9
(22) Anmeldetag: 05.09.2013
(51) Int. Cl.: G02B 27/09, G02B 19/00, B23K 26/073

(54) **VERFAHREN UND VORRICHTUNG ZUR FOKUSSIERUNG VON LASERLICHT**
METHOD AND DEVICE FOR FOCUSING LASER LIGHT
PROCÉDÉ ET DISPOSITIF DESTINÉS À FOCALISER DE LA LUMIÈRE LASER

(30) Priorität: 07.09.2012 DE 102012108347
(43) Veröffentlichungstag der Anmeldung: 15.07.2015
(73) Patentinhaber: LIMO Patentverwaltung GmbH & Co. KG, 44319 Dortmund (DE)
(72) Erfinder: MITRA, Thomas, 44309 Dortmund (DE)
(74) Vertreter: Manske, Jörg
(86) Internationale Anmeldenummer: PCT/EP2013/068368
(87) Internationale Veröffentlichungsnummer: WO 2014/037442

(56) Entgegenhaltungen:
- WO-A2-2006/066706
- US-A- 4 192 578
- US-A1- 2006 091 120

## Beschreibung

Die vorliegende Erfindung betrifft ein Verfahren und eine Vorrichtung zur Fokussierung von Laserlicht.

Definitionen: Die Bezeichnungen Licht oder Laserstrahlung sollen nicht auf den Bereich des sichtbaren Lichts einschränken. Vielmehr werden die Bezeichnungen Licht oder Laserstrahlung im Rahmen dieser Anmeldung für elektromagnetische Strahlung im gesamten Wellenlängenbereich vom FIR bis zum XUV verwendet. In Ausbreitungsrichtung der Laserstrahlung oder des Lichts meint die mittlere Ausbreitungsrichtung der Laserstrahlung oder des Lichts, insbesondere wenn diese(s) keine ebene Welle ist oder zumindest teilweise divergent ist. Mit Laserstrahl, Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil wie einem Supergauß-Profil oder einem Top-Hat-Profil, der keinen infinitesimal kleinen, sondern einen ausgedehnten Strahlquerschnitt aufweist. Mit Top-Hat-Verteilung oder Top-Hat-Intensitätsverteilung oder Top-Hat-Profil ist eine Intensitätsverteilung gemeint, die sich zumindest hinsichtlich einer Richtung im Wesentlichen durch eine Rechteckfunktion (rect (x)) beschreiben lässt beziehungsweise ein Plateau aufweist. Dabei sollen reale Intensitätsverteilungen, die Abweichungen von einer Rechteckfunktion beziehungsweise geneigte Flanken aufweisen, ebenfalls als Top-Hat-Verteilung oder Top-Hat-Profil bezeichnet werden können.

Im Stand der Technik werden in einer Arbeitsebene lange und verhältnismäßig schmale Laserlinien dadurch erzeugt, dass das von einer Laserlichtquelle - insbesondere von einem Laserdiodenbarren mit einer Mehrzahl in einer ersten Richtung (der so genannten Slow-Axis-Richtung) nebeneinander angeordneter Emitter - emittierte und mit Optikmitteln kollimierte Laserlicht mit Hilfe hochpräzise gefertigter Zylinderlinsenmittel in eine Arbeitsebene gelenkt wird, so dass dort ein Fokus oder eine Abbildung generiert wird. Derartige Zylinderlinsenmittel weisen einen sich in Längsrichtung parallel zur Zylinderachse erstreckenden Linsenscheitel auf. Um in der Arbeitsebene eine präzise definierte Laserlinie zu erhalten, muss das zur Fokussierung des Laserlichts verwendete Zylinderlinsenmittel in Längsrichtung einen sehr geraden Scheitelverlauf aufweisen. Somit wird die Erzeugung langer, schmaler und dabei präzise abgebildeter Laserlinien in hohem Maße durch die Qualität der verwendeten Zylinderlinsenmittel bestimmt. So genannte Ortsfehler im Bereich des Linsenscheitels führen zu Abbildungsfehlern, die sich in einer schwankenden Linienbreite bemerkbar machen. Im Stand der Technik stellt die Fertigung derartig präziser Zylinderlinsenmittel, wie sie für die Erzeugung präziser, linienförmiger Intensitätsverteilungen in einer Arbeitsebene benötigt werden, ein großes Problem dar.

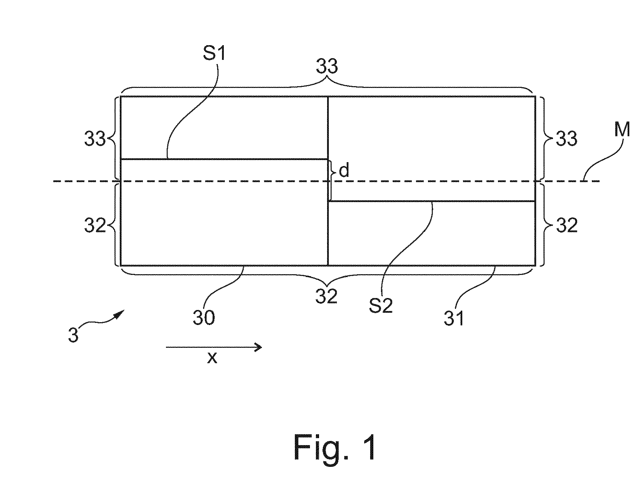

In Fig. 1 ist ein Zylinderlinsenmittel 3 dargestellt, das zwei sich in x-Richtung aneinander anschließende, beispielsweise aus stoffschlüssig miteinander verbundenen Zylinderlinsenelementen gebildete Zylinderlinsenabschnitte 30, 31 umfasst. Im Idealfall sollte sich der Linsenscheitel möglichst entlang der mit M bezeichneten Linie erstrecken, welche eine Mittellinie der äußeren Mantelfläche des Zylinderlinsenmittels 3 definiert, um dadurch eine präzise linienförmige Intensitätsverteilung in einer Arbeitsebene zu erhalten. Es wird deutlich, dass sich die Linsenscheitel S1, S2 der beiden Zylinderlinsenabschnitte 30, 31 vorliegend nicht ideal entlang der Linie M erstrecken, sondern einen Versatz d aufweisen. Die Linsenscheitel S1, S2 des ersten Zylinderlinsenabschnitts 30 und des zweiten Zylinderlinsenabschnitts 31 erstrecken sich neben der Linie M, so dass sich der Versatz d bildet. Es soll an dieser Stelle angemerkt werden, dass die Größe des Versatzes d zwischen den Linsenscheiteln S1, S2 der beiden Zylinderlinsenabschnitte 30, 31 nicht maßstabsgerecht gezeichnet ist, sondern lediglich der einfacheren zeichnerischen Veranschaulichung dienen soll. Bei herkömmlichen Zylinderlinsenmitteln 3 ist der Versatz d üblicherweise < 0,5 mm.

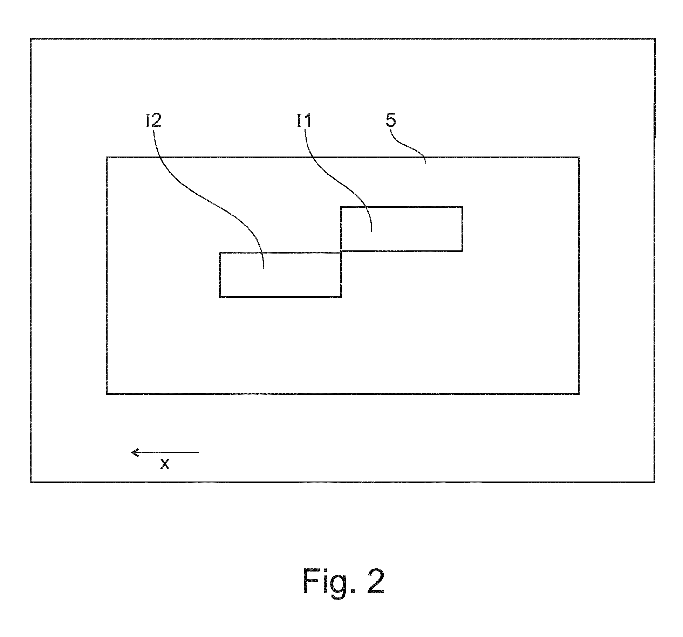

Wird ein derartiges Zylinderlinsenmittel 3 nun zur Fokussierung eines kollimierten Laserstrahls mit Tophat-Winkelverteilung in eine Arbeitsebene verwendet, resultiert daraus eine von einer "idealen" Linienform abweichende Intensitätsverteilung, wie sie in Fig. 2 dargestellt ist. In der Arbeitsebene 5 wird eine Intensitätsverteilung erzeugt, die einen Fokuslagenfehler aufweist. Es zeigt sich, dass die Intensität I1 desjenigen Teils des Laserlichts, welcher den ersten Zylinderlinsenabschnitt 30 passiert hat, und die Intensität I2 desjenigen Teils des Laserlichts, welcher den zweiten Zylinderlinsenabschnitt 31 passiert hat, orthogonal zur x-Richtung einen Versatz d' aufweisen, wobei der Versatz d' der Intensitäten I1, I2 in der Arbeitsebene 5 dem Versatz d der Linsenscheitel S1, S2 der beiden Zylinderlinsenabschnitte 30, 31 entspricht. Wenn zum Beispiel die Zylinderlinsenabschnitte 30, 31 einen Versatz d = 0,2 mm aufweisen, beträgt der Versatz d' der Intensitäten I1, I2 in der Arbeitsebene 5 ebenfalls 0,2 mm.

Die Problematik des Scheitelfehlers wurde vorstehend beispielhaft anhand eines Zylinderlinsenmittels 3 erläutert, bei dem die beiden Zylinderlinsenabschnitte 30, 31 aus zwei stoffschlüssig miteinander verbundenen Zylinderlinsenelementen gebildet sind. Die Problematik des Scheitelfehlers kann aber auch bei einstückigen Zylinderlinsenmitteln 3 auftreten, bei denen der Linsenscheitel S1, S2 auf Grund von häufig nicht zu vermeidenden Fertigungsungenauigkeiten parallel zur Zylinderachse nicht ideal gerade verläuft, sondern ebenfalls einen Versatz d aufweist.

Die US 4,192,578 A offenbart ein Verfahren zur Fokussierung von Laserlicht in eine Arbeitsebene, bei dem das Laserlicht durch einen ersten Transmissionsabschnitt eines Zylinderlinsenmittels transmittiert wird.

Die Aufgabe der vorliegenden Erfindung besteht nunmehr darin, ein Verfahren und eine Vorrichtung zur Fokussierung von Laserlicht in eine Arbeitsebene anzugeben, die es ermöglichen, auch weniger präzise gefertigte Zylinderlinsenmittel einsetzen zu können oder auch aus mehreren Zylinderlinsenelementen zusammengesetzte Zylinderlinsenmittel verwenden zu können und dennoch eine linienförmige Intensitätsverteilung in der Arbeitsebene generieren zu können.

Die Lösung dieser Aufgabe liefert ein Verfahren zur Fokussierung von Laserlicht mit den Merkmalen des Anspruchs 1. Hinsichtlich der Vorrichtung wird diese Aufgabe durch eine Vorrichtung zur Fokussierung von Laserlicht mit den Merkmalen des Anspruchs 5 gelöst. Die Unteransprüche betreffen vorteilhafte Weiterbildungen der Erfindung.

Bei einem erfindungsgemäßen Verfahren zur Fokussierung von Laserlicht in eine Arbeitsebene wird das Laserlicht durch einen Umlenkspiegel derart umgelenkt, dass es sich im Wesentlichen parallel zu einer optischen Achse eines Retroreflektormittels ausbreitet und durch einen ersten Transmissionsabschnitt eines Zylinderlinsenmittels, dessen Linsenscheitel einen Versatz aufweist, transmittiert wird und nachfolgend von dem Retroreflektormittel derart zurückreflektiert wird, dass das Laserlicht durch einen zweiten Transmissionsabschnitt des Zylinderlinsenmittels, der vom ersten Transmissionsabschnitt verschieden ist, transmittiert und in die Arbeitsebene fokussiert wird. Das erfindungsgemäße Verfahren ermöglicht in vorteilhafter Weise eine Kompensation des Versatzes des Linsenscheitels des Zylinderlinsenmittels, so dass trotz dieses Versatzes in der Arbeitsebene eine im Wesentlichen linienförmige Intensitätsverteilung erzeugt werden kann.
In einer besonders bevorzugten Ausführungsform wird vorgeschlagen, dass eine Scheitellinie des Retroreflektormittels und/oder der Linsenscheitel des Zylinderlinsenmittels im optischen Strahlengang derart verschoben werden, dass der Winkel des Eingangsstrahls des Laserlichts und/oder der Winkel des Ausgangsstrahls des Laserlichts eingestellt werden können. Dadurch wird eine größere Flexibilität bei der Fokussierung des Laserlichts in die Arbeitsebene erreicht.

In einer bevorzugten Ausführungsform wird vorgeschlagen, dass als Retroreflektormittel ein Umkehrprisma verwendet wird. In einer alternativen Ausführungsform besteht die Möglichkeit, dass als Retroreflektormittel ein Umkehrspiegel verwendet wird. Umkehrprismen beziehungsweise Umkehrspiegel lassen sich sehr einfach und kostengünstig herstellen und eignen sich daher besonders für die Verwendung als Retroreflektormittel bei dem hier vorgestellten Verfahren.

Gemäß Anspruch 5 umfasst eine Vorrichtung zur Fokussierung von Laserlicht in eine Arbeitsebene,
- einen Umlenkspiegel,
- ein Zylinderlinsenmittel, dessen Linsenscheitel einen Versatz aufweist und das einen ersten Transmissionsabschnitt sowie einen zweiten Transmissionsabschnitt, der vom ersten Transmissionsabschnitt verschieden ist, umfasst, sowie
- ein Retroreflektormittel, das eine optische Achse aufweist,
wobei der Umlenkspiegel im Strahlengang der Vorrichtung so angeordnet ist, dass er das Laserlicht während des Betriebs der Vorrichtung derart umlenken kann, dass es sich im Wesentlichen parallel zur optischen Achse des Retroreflektormittels ausbreiten kann und durch den ersten Transmissionsabschnitt des Zylinderlinsenmittels transmittiert werden kann und nachfolgend von dem Retroreflektormittel derart zurückreflektiert werden kann, dass das Laserlicht durch den zweiten Transmissionsabschnitt des Zylinderlinsenmittels transmittiert und in die Arbeitsebene fokussiert werden kann. Die erfindungsgemäße Vorrichtung ermöglicht in vorteilhafter Weise eine Kompensation des Versatzes des Linsenscheitels des Zylinderlinsenmittels, so dass trotz dieses Versatzes in der Arbeitsebene eine im Wesentlichen linienförmige Intensitätsverteilung erzeugt werden kann. Dadurch, dass ein Umlenkspiegel zwischen der Laserlichtquelle und dem Zylinderlinsenmittel angeordnet ist, erreicht man eine Trennung vom Auftreffpunkt des Eingangsstrahls des Laserlichts auf dem Umlenkspiegel und des Ausgangsstrahls des Laserlichts nach dem ersten Durchgang durch das Zylinderlinsenmittel und dem Durchgang durch das Retroreflektormittel, indem das Zylinderlinsenmittel nicht orthogonal zu dem auf das Retroreflektormittel auftreffenden Eingangsstrahl des Laserlichts orientiert ist.

Der Grundgedanke des erfindungsgemäßen Verfahrens beziehungsweise der erfindungsgemäßen Vorrichtung besteht somit darin, dass das Laserlicht der Laserlichtquelle nicht direkt durch die eine Fokussierlinse bildende Zylinderlinse auf die Arbeitsebene trifft. Vielmehr ist ein Retroreflektormittel vorgesehen, das in vorteilhafter Weise dazu in der Lage ist, Ortsfehler des Linsenscheitels derart zu korrigieren, dass ein Versatz des Linsenscheitels zu dem auf das Zylinderlinsenmittel treffenden Strahl nur einen minimalen Versatz des auf die Arbeitsebene abgebildeten Laserstrahls erzeugt. Dieser "Fehler" findet sich in demjenigen Winkel wieder, in dem die Abbildung in der Arbeitsebene erzeugt wird. Dieser ist aber in der typischen Anwendung in der Regel weit weniger kritisch als eine schwankende Linienbreite.

In einer bevorzugten Ausführungsform wird vorgeschlagen, dass das Retroreflektormittel als Umkehrprisma mit einer ersten Lichtumlenkfläche und einer zweiten Lichtumlenkfläche ausgebildet ist. An jeder der beiden Lichtumlenkflächen wird das Laserlicht nach dem physikalischen Prinzip der inneren Totalreflexion jeweils um 90° umgelenkt, so dass das auf das Umkehrprisma treffende Laserlicht insgesamt um 180° umgelenkt wird. Vor und nach dem Umkehrprisma breitet sich das Laserlicht im Wesentlichen parallel zur optischen Achse des Umkehrprismas aus. Optional können die Lichtumlenkflächen des Umkehrprismas auch verspiegelt ausgebildet sein.

In einer besonders vorteilhaften Ausführungsform wird vorgeschlagen, dass zwischen der ersten Lichtumlenkfläche und der zweiten Lichtumlenkfläche des Umkehrprismas eine Scheitellinie ausgebildet ist und die Vorrichtung Mittel zur Verschiebung der Scheitellinie umfasst. Durch eine Verschiebung der Scheitellinie des Umkehrprismas (und mithin auch des Umkehrprismas selbst) können Winkelbeziehungen des Eingangsstrahls und des Ausgangsstrahls des Laserlichts in vorteilhafter Weise angepasst werden.

In einer alternativen Ausführungsform kann vorgesehen sein, dass das Retroreflektormittel als Umkehrspiegel mit einer ersten Spiegelfläche und mit einer zweiten Spiegelfläche ausgebildet ist. An jeder der beiden Spiegelflächen wird das Laserlicht jeweils um 90° umgelenkt, so dass das auf den Umkehrspiegel treffende Laserlicht insgesamt um 180° umgelenkt wird. Vor und nach dem Umkehrprisma breitet sich das Laserlicht im Wesentlichen parallel zur optischen Achse des Umkehrspiegels aus.

In einer vorteilhaften Ausführungsform besteht die Möglichkeit, dass zwischen der ersten Lichtumlenkfläche und der zweiten Lichtumlenkfläche des Umkehrspiegels eine Scheitellinie ausgebildet ist und die Vorrichtung Mittel zur Verschiebung der Scheitellinie umfasst. Durch eine Verschiebung der Scheitellinie des Umkehrspiegels (und mithin auch des Umkehrspiegels selbst) können Winkelbeziehungen des Eingangsstrahls und des Ausgangsstrahls des Laserlichts in vorteilhafter Weise angepasst werden.

In einer weiteren, besonders vorteilhaften Ausführungsform kann vorgesehen sein, dass die Vorrichtung Mittel zur Verschiebung des Linsenscheitels des Zylinderlinsenmittels aufweist. Durch eine Verschiebung der Scheitellinie des Zylinderlinsenmittels (und mithin auch des Zylinderlinsenmittels selbst) können Winkelbeziehungen des Eingangsstrahls und des Ausgangsstrahls des Laserlichts in vorteilhafter Weise weiter angepasst werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Draufsicht auf ein Zylinderlinsenmittel, welches einen Scheitelfehler aufweist,
- Fig. 2: eine schematische Darstellung einer Intensitätsverteilung von Laserlicht, das mittels des Zylinderlinsenmittels gemäß Fig. 1 in eine Arbeitsebene fokussiert wurde,
- Fig. 3: eine schematische Darstellung einer Vorrichtung zur Fokussierung von Laserlicht, die gemäß einem ersten Ausführungsbeispiel der vorliegenden Erfindung ausgeführt ist,
- Fig. 4: eine schematische Darstellung einer Vorrichtung zur Fokussierung von Laserlicht, die gemäß einem zweiten Ausführungsbeispiel der vorliegenden Erfindung ausgeführt ist,
- Fig. 5: eine schematische Darstellung einer Intensitätsverteilung des Laserlichts, das mittels einer Vorrichtung gemäß Fig. 3 oder 4 in eine Arbeitsebene fokussiert wurde.

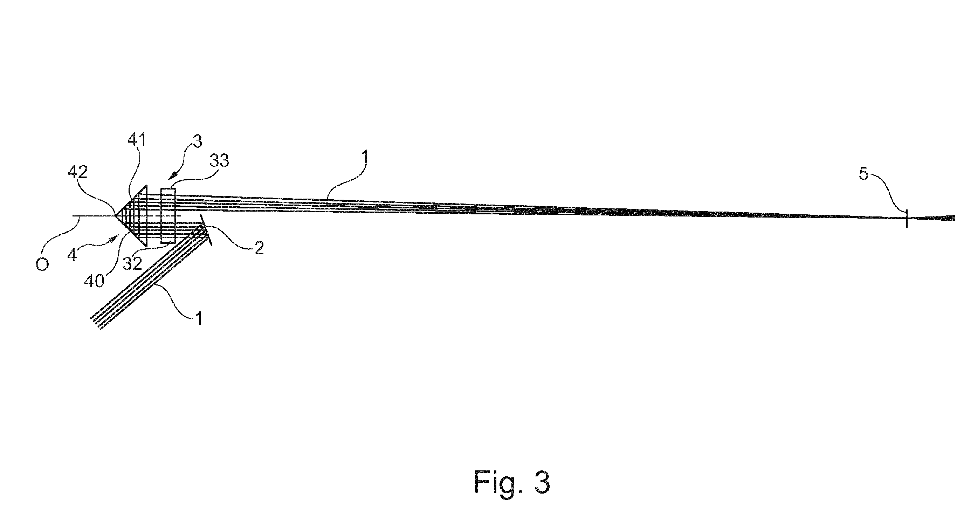

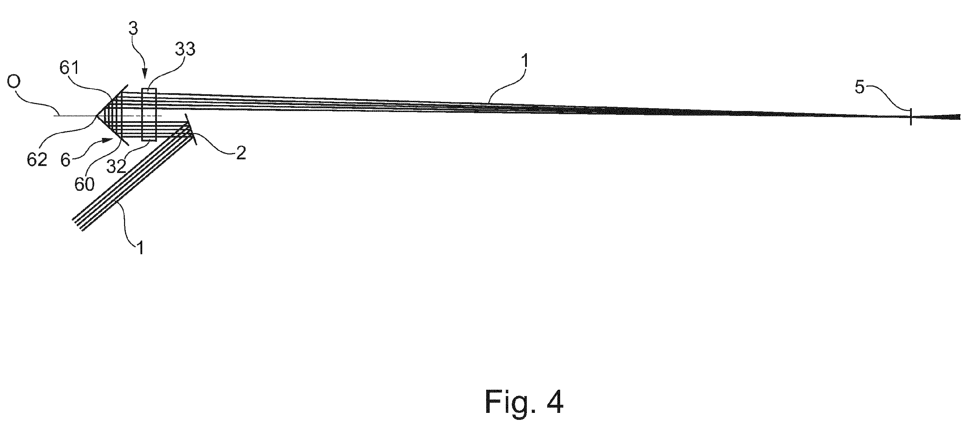

Unter Bezugnahme auf Fig. 3 bis 5 sollen nachfolgend zwei Ausführungsbeispiele der vorliegenden Erfindung näher erläutert werden. Dabei sind in Fig. 3 und 4 zur Vereinfachung der nachfolgenden Beschreibung zweidimensionale kartesische Koordinatensysteme eingezeichnet, welche die zueinander orthogonalen y- und z-Richtungen definieren. Die x-Richtung erstreckt sich orthogonal zur y- und z-Richtung in die Zeichenebene.

Eine Vorrichtung zur Fokussierung von Laserlicht 1, die gemäß einem ersten Ausführungsbeispiel der vorliegenden Erfindung ausgeführt ist, ist in Fig. 3 gezeigt. Das auf die Vorrichtung treffende Laserlicht 1 wird von einer hier aus Vereinfachungsgründen nicht explizit dargestellten Laserlichtquelle - insbesondere von einem Laserdiodenbarren mit einer Mehrzahl von Emittern, die in einer ersten Richtung (der so genannten Slow-Axis-Richtung) beabstandet zueinander nebeneinander angeordnet sind - emittiert und mit Hilfe geeigneter, ebenfalls nicht explizit dargestellter Optikmittel kollimiert. Die Ausbreitungsrichtung, in der sich das Laserlicht 1 der Laserlichtquelle zunächst ausbreitet, ist vorliegend die z-Richtung.

Die Vorrichtung zur Fokussierung von Laserlicht 1 umfasst in diesem Ausführungsbeispiel einen Umlenkspiegel 2, ein Zylinderlinsenmittel 3, dessen Zylinderachse sich in x-Richtung (vorliegend also in die Zeichenebene) erstreckt, sowie ein Retroreflektormittel, das in diesem Ausführungsbeispiel durch ein Umkehrprisma 4 gebildet ist, welches eine erste Lichtumlenkfläche 40 und eine zweite Lichtumlenkfläche 41 umfasst, die miteinander einen Winkel von 90° einschließen und dadurch eine Scheitellinie 42 bilden. Senkrecht zur Scheitellinie 42 erstreckt sich die optische Achse O des Umkehrprismas 4. Das Umkehrprisma 4 ist dazu in der Lage, das einfallende Laserlicht 1 um 180° umzulenken. Das Zylinderlinsenmittel 3 ist wie in Fig. 1 dargestellt ausgeführt. Die Scheitel S1, S2 der beiden Zylinderlinsenabschnitte 30, 31 weisen somit den in Fig. 1 dargestellten Versatz d > 0 mm auf.

Das sich in z-Richtung ausbreitende kollimierte Laserlicht 1 trifft zunächst auf den Umlenkspiegel 2, der derart geneigt im Strahlengang der Vorrichtung angeordnet ist, dass er das Laserlicht 1 so umlenken kann, dass sich die Ausbreitungsrichtung des Laserlichts 1 nach der Reflexion am Umlenkspiegel 2 im Wesentlichen parallel zur optischen Achse O des Umkehrprismas 4 erstreckt. Das Laserlicht 1 wird durch einen ersten, durch geschweifte Klammern gekennzeichneten Transmissionsabschnitt 32 des Zylinderlinsenmittels 3 transmittiert, der durch Teilbereiche des ersten und zweiten Zylinderlinsenabschnitts 30, 31 gebildet wird, die sich von den Außenrändern bis zur Mittellinie M erstrecken (siehe Fig. 1). Das Laserlicht 1 ist bei der Transmission durch den ersten Transmissionsabschnitt 32 dem Versatz d der Linsenscheitel S1, S2 ausgesetzt. Dann trifft das Laserlicht 1 auf das Umkehrprisma 4 und wird an der ersten Lichtumlenkfläche 40 und an der zweiten Lichtumlenkfläche 41 nach dem physikalischen Prinzip der inneren Totalreflexion jeweils um 90° umgelenkt. Somit wird das auf das Umkehrprisma 4 treffende Laserlicht 1 insgesamt um 180° umgelenkt.

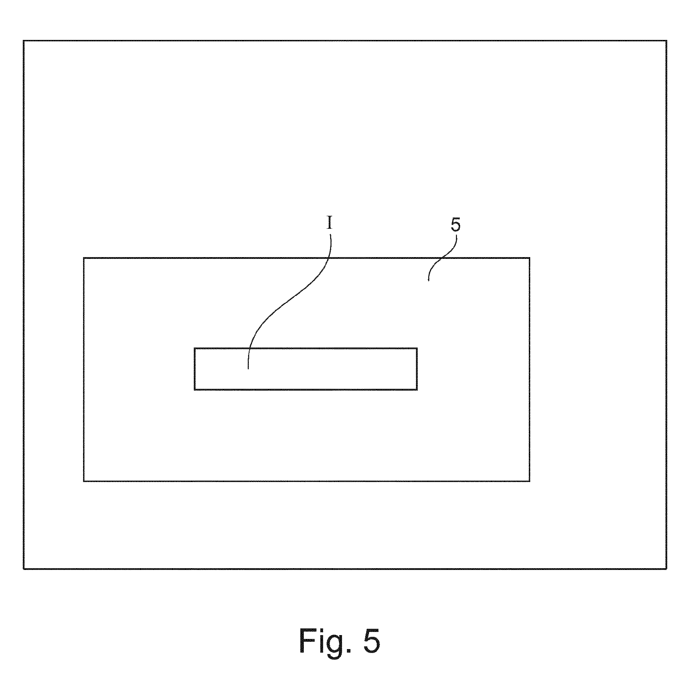

Das um 180° umgelenkte Laserlicht 1 breitet sich wiederum im Wesentlichen parallel zur optischen Achse O des Umkehrprismas 4 aus und trifft nachfolgend auf einen zweiten, ebenfalls durch geschweifte Klammern gekennzeichneten Transmissionsabschnitt 33 des Zylinderlinsenmittels 3, der vom ersten Transmissionsabschnitt 32 verschieden ist und ebenfalls durch Teilbereiche des ersten und zweiten Zylinderlinsenabschnitts 30, 31 gebildet wird, die sich von den Außenrändern bis zur Mittellinie M erstrecken. Das Laserlicht 1 ist bei der Transmission durch den ersten Transmissionsabschnitt 32 dem Versatz der Linsenscheitel S1, S2 ausgesetzt. Das Laserlicht 1 wird durch den zweiten Transmissionsabschnitt 33 des Zylinderlinsenmittels 3 transmittiert und an der gekrümmten Lichtaustrittsfläche des zweiten Transmissionsabschnitts 33 des Zylinderlinsenmittels 3 derart gebrochen, dass es in die Arbeitsebene 5 fokussiert wird, in der eine im Wesentlichen linienförmige Intensitätsverteilung erzeugt wird, wie sie in Fig. 5 schematisch dargestellt ist.

Anhand der Darstellung in Fig. 5 wird deutlich, dass mit Hilfe der hier vorgestellten Vorrichtung zur Fokussierung von Laserlicht 1 (vorliegend mit einer Tophat-Winkelverteilung) trotz des Versatzes d der Linsenscheitel S1, S2 die gewünschte linienförmige Intensitätsverteilung I in der Arbeitsebene 5 erzeugt werden kann. Wenn die Scheitel S1, S2 der beiden Zylinderlinsenabschnitte 30, 31 zum Beispiel ein Versatz d=0,2 mm aufweisen (zum Beispiel durch eine ungenaue Fertigung oder dadurch, dass das Zylinderlinsenmittel 3 aus zwei stoffschlüssig miteinander verbundenen Zylinderlinsenelementen hergestellt ist) ist es möglich, dass die hier vorgestellte Vorrichtung zur Fokussierung von Laserlicht 1 den Versatz der Scheitel S1, S2 der beiden Zylinderlinsenabschnitte 30, 31 derart korrigieren und kompensieren kann, dass in der Arbeitsebene 5 ein Versatz der Intensitätsverteilung I orthogonal zur x-Richtung kaum messbar ist. Weitere Untersuchungen haben gezeigt, dass zum Beispiel bei einem Versatz der Scheitel S1, S2 der beiden Zylinderlinsenabschnitte 30, 31 um 0,4 mm der Versatz der Intensitätsverteilung I im Fokus in der Arbeitsebene 5 nur etwa 10 µm (und damit rund 1 /40 des Scheitelfehlers) beträgt.

Unter Bezugnahme auf Fig. 4 ist dort eine Vorrichtung zur Fokussierung von Laserlicht 1 dargestellt, die gemäß einem zweiten Ausführungsbeispiel der vorliegenden Erfindung ausgeführt ist. Der grundlegende Aufbau der Vorrichtung entspricht demjenigen des ersten Ausführungsbeispiels. Die Vorrichtung umfasst wiederum einen Umlenkspiegel 2, ein Zylinderlinsenmittel 3 sowie ein Retroreflektormittel, das in diesem Ausführungsbeispiel durch einen Umkehrspiegel 6 gebildet ist. Der Umkehrspiegel 6 weist eine erste Spiegelfläche 60 und eine zweite Spiegelfläche 61 auf, die miteinander einen Winkel von 90° einschließen und dadurch eine Scheitellinie 62 bilden. Senkrecht zur Scheitellinie 62 erstreckt sich die optische Achse O des Umkehrspiegels 6.

Das kollimierte Laserlicht 1 der Laserlichtquelle breitet sich zunächst wiederum in z-Richtung aus und trifft auf den Umlenkspiegel 2, der derart geneigt im Strahlengang der Vorrichtung angeordnet ist, dass er das Laserlicht 1 so umlenken kann, dass sich die Ausbreitungsrichtung des Laserlichts 1 nach der Reflexion am Umlenkspiegel 2 im Wesentlichen parallel zur optischen Achse O des Umkehrspiegels 6 erstreckt.

Das Laserlicht 1 wird wie im ersten Ausführungsbeispiel durch den ersten Transmissionsabschnitt 32 des Zylinderlinsenmittels 3 transmittiert. Dabei ist das Laserlicht 1 bei der Transmission durch den ersten Transmissionsabschnitt 32 dem Versatz d der Linsenscheitel S1, S2 ausgesetzt. Dann trifft das Laserlicht 1 auf die erste Spiegelfläche 60 des Umkehrspiegels 6 und wird von dieser um 90° umgelenkt. Das Laserlicht 1 trifft dann auf die zweite Spiegelfläche 61 des Umkehrspiegels 6 und wird an dieser abermals um 90° umgelenkt. Mit Hilfe des Umkehrspiegels 6 wird das auftreffende Laserlicht 1 also insgesamt um 180° umgelenkt. Das um 180° umgelenkte Laserlicht 1 trifft dann auf den zweiten Transmissionsabschnitt 33 des Zylinderlinsenmittels 3, der - wie oben bereits erläutert - vom ersten Transmissionsabschnitt 32 verschieden ist. Das Laserlicht 1 ist bei der Transmission durch den ersten Transmissionsabschnitt 32 wiederum dem Versatz der Linsenscheitel S1, S2 ausgesetzt. Das Laserlicht 1 wird durch den zweiten Transmissionsabschnitt 33 des Zylinderlinsenmittels 3 transmittiert und an der gekrümmten Lichtaustrittsfläche des zweiten Transmissionsabschnitts 33 des Zylinderlinsenmittels 3 derart gebrochen, dass es in die Arbeitsebene 5 fokussiert wird, in der wiederum eine linienförmige Intensitätsverteilung I erzeugt wird, wie sie in Fig. 5 dargestellt ist.

Die den beiden hier vorgestellten Ausführungsbeispielen der Erfindung zu Grunde liegende Idee besteht somit darin, dass das Laserlicht 1 der Laserlichtquelle nicht direkt durch das eine Fokussierlinse bildende Zylinderlinsenmittel 3 auf die Arbeitsebene 5 trifft, sondern dass ein Retroreflektormittel (insbesondere ein Umkehrprisma 4 oder ein Umkehrspiegel 6) vorgesehen ist, mittels dessen das Laserlicht 1, das durch einen ersten Transmissionsabschnitt 30 des Zylinderlinsenmittels 3 transmittiert wurde, derart um 180° umgelenkt werden kann, dass es durch einen vom ersten Transmissionsabschnitt 32 verschiedenen zweiten Transmissionsabschnitt 33 transmittiert werden kann und von diesem in die Arbeitsebene 5 fokussiert werden kann. Das Laserlicht 1 ist bei der Transmission durch den ersten Transmissionsabschnitt 32 und durch den zweiten Transmissionsabschnitt 33 jeweils dem Versatz der Linsenscheitel S1, S2 ausgesetzt. Das Retroreflektormittel ist in vorteilhafter Weise dazu in der Lage, Ortsfehler des Linsenscheitels S1, S2 derart zu korrigieren, dass der Versatz d des Linsenscheitels S1, S2 zu dem auf das Zylinderlinsenmittel 3 treffenden Laserlicht 1 nur einen minimalen Versatz des auf die Arbeitsebene 5 abgebildeten Laserlichts 1 erzeugt. Dieser "Fehler" findet sich in demjenigen Winkel wieder, in dem die Abbildung in der Arbeitsebene 5 erzeugt wird. Dieser ist aber in der typischen Anwendung in der Regel weit weniger kritisch als eine schwankende Linienbreite.

Durch eine Verschiebung des Scheitels S1, S2 des Zylinderlinsenmittels 3 und/oder durch eine Verschiebung der Scheitellinie 42, 62 des Umkehrprismas 4 beziehungsweise des Umkehrspiegels 6 können der Winkel des Eingangsstrahls des Laserlichts 1 und der Winkel des Ausgangsstrahls des Laserlichts 1 in vorteilhafter Weise weiterhin eingestellt werden.

## Patentansprüche

1. Verfahren zur Fokussierung von Laserlicht (1) in eine Arbeitsebene (5), bei dem das Laserlicht (1) durch einen Umlenkspiegel (2) derart umgelenkt wird, dass es sich im Wesentlichen parallel zu einer optischen Achse (O) eines Retroreflektormittels ausbreitet und durch einen ersten Transmissionsabschnitt (32) eines Zylinderlinsenmittels (3), dessen Linsenscheitel (S1, S2) einen Versatz (d) aufweist, transmittiert wird und nachfolgend von dem Retroreflektormittel derart zurückreflektiert wird, dass das Laserlicht (1) durch einen zweiten Transmissionsabschnitt (33) des Zylinderlinsenmittels (3), der vom ersten Transmissionsabschnitt (32) verschieden ist, transmittiert und in die Arbeitsebene (5) fokussiert wird.

2. Verfahren nach Anspruch 1, **dadurch gekennzeichnet, dass** eine Scheitellinie (42, 62) des Retroreflektormittels und/oder der Linsenscheitel (S1, S2) des Zylinderlinsenmittels (3) im optischen Strahlengang derart verschoben werden, dass der Winkel des Eingangsstrahls des Laserlichts (1) und/oder der Winkel des Ausgangsstrahls des Laserlichts (1) eingestellt werden können.

3. Verfahren nach Anspruch 1 oder 2, **dadurch gekennzeichnet, dass** als Retroreflektormittel ein Umkehrprisma (4) verwendet wird.

4. Verfahren nach einem der Ansprüche 1 oder 2, **dadurch gekennzeichnet, dass** als Retroreflektormittel (4) ein Umkehrspiegel (6) verwendet wird.

5. Vorrichtung zur Fokussierung von Laserlicht (1) in eine Arbeitsebene, umfassend
- einen Umlenkspiegel (2),
- ein Zylinderlinsenmittel (3), dessen Linsenscheitel (S1, S2) einen Versatz (d) aufweist und das einen ersten Transmissionsabschnitt (32) sowie einen zweiten Transmissionsabschnitt (33), der vom ersten Transmissionsabschnitt (32) verschieden ist, umfasst, sowie
- ein Retroreflektormittel, das eine optische Achse (O) aufweist, wobei der Umlenkspiegel (2) im Strahlengang der Vorrichtung so angeordnet ist, dass er das Laserlicht (1) während des Betriebs der Vorrichtung derart umlenken kann, dass es sich im Wesentlichen parallel zur optischen Achse (O) des Retroreflektormittels ausbreiten kann und durch den ersten Transmissionsabschnitt (32) des Zylinderlinsenmittels (3) transmittiert werden kann und nachfolgend von dem Retroreflektormittel derart zurückreflektiert werden kann, dass das Laserlicht (1) durch den zweiten Transmissionsabschnitt (33) des Zylinderlinsenmittels (3) transmittiert und in die Arbeitsebene (5) fokussiert werden kann.

6. Vorrichtung nach Anspruch 5, **dadurch gekennzeichnet, dass** das Retroreflektormittel als Umkehrprisma (4) mit einer ersten Lichtumlenkfläche (40) und einer zweiten Lichtumlenkfläche (41) ausgebildet ist.

7. Vorrichtung nach Anspruch 6, **dadurch gekennzeichnet, dass** zwischen der ersten Lichtumlenkfläche (40) und der zweiten Lichtumlenkfläche (41) des Umkehrprismas (4) eine Scheitellinie (42) ausgebildet ist und die Vorrichtung Mittel zur Verschiebung der Scheitellinie (42) umfasst.

8. Vorrichtung nach Anspruch 5, **dadurch gekennzeichnet, dass** das Retroreflektormittel als Umkehrspiegel (6) mit einer ersten Spiegelfläche (60) und mit einer zweiten Spiegelfläche (61) ausgebildet ist.

9. Vorrichtung nach Anspruch 8, **dadurch gekennzeichnet, dass** zwischen der ersten Lichtumlenkfläche (60) und der zweiten Lichtumlenkfläche (61) des Umkehrspiegels (6) eine Scheitellinie (62) ausgebildet ist und die Vorrichtung Mittel zur Verschiebung der Scheitellinie (62) umfasst.

10. Vorrichtung nach einem der Ansprüche 5 bis 9, **dadurch gekennzeichnet, dass** die Vorrichtung Mittel zur Verschiebung des Linsenscheitels (S1, S2) des Zylinderlinsenmittels (3) aufweist.

## Claims

1. Method for focusing laser light (1) into a working plane (5), in which the laser light (1) is deflected by a deflection mirror (2) in such a way that it is propagated substantially parallel to an optical axis (0) of a retroreflector means and is transmitted by a first transmission portion (32) of a cylindrical lens means (3) whose lens apex (S1, S2) has an offset (d), and is subsequently reflected back by the retroreflector means in such a way that the laser light (1) is transmitted by a second transmission portion (33) of the cylindrical lens means (3) which is different from the first transmission portion (32), and focused into the working plane (5).

2. Method according to Claim 1, **characterized in that** an apex line (42, 62) of the retroreflector means and/or the lens apex (S1, S2) of the cylindrical lens means (3) are/is displaced in the optical beam path in such a way that the angle of the input beam of the laser light (1), and/or the angle of the output beam of the laser light (1) can be set.

3. Method according to Claim 1 or 2, **characterized in that** an inverting prism (4) is used as retroreflector means.

4. Method according to either of Claims 1 and 2, **characterized in that** an inverting mirror (6) is used as retroreflector means (4).

5. Device for focusing laser light (1) into a working plane, comprising
- a deflection mirror (2),
- a cylindrical lens means (3), whose lens apex (S1, S2) has an offset (d) and which comprises a first transmission portion (32) and a second transmission portion (33) which is different from the first transmission portion (32), and
- a retroreflector means which has an optical axis (0), wherein the deflection mirror (2) is arranged in the beam path of the device such that it can deflect the laser light (1) during the operation of the device in such a way that it can propagate substantially parallel to the optical axis (0) of the retroreflector means and can be transmitted by the first transmission portion (32) of the cylindrical lens means (3) and can subsequently be reflected back by the retroreflector means in such a way that the laser light (1) can be transmitted by the second transmission portion (33) of the cylindrical lens means (3) and can be focused into the working plane (5).

6. Device according to Claim 5, **characterized in that** the retroreflector means is designed as an inverting prism (4) having a first light deflection surface (40) and a second light deflection surface (41).

7. Device according to Claim 6, **characterized in that** an apex line (42) is formed between the first light deflection surface (40) and the second light deflection surface (41) of the inverting prism (4), and the device comprises means for displacing the apex line (42).

8. Device according to Claim 5, **characterized in that** the retroreflector means is designed as an inverting mirror (6) with a first mirror surface (60) and with a second mirror surface (61).

9. Device according to Claim 8, **characterized in that** an apex line (62) is formed between the first light deflection surface (60) and the second light deflection surface (61) of the inverting mirror (6), and the device comprises means for displacing the apex line (62).

10. Device according to one of Claims 5 to 9, **characterized in that** the device has means for displacing the lens apex (S1, S2) of the cylindrical lens means (3).

## Revendications

1. Procédé destiné à focaliser de la lumière laser (1) dans un plan de travail (5), lors duquel la lumière laser (1) est déviée par un miroir de déviation (2) de sorte à se propager sensiblement à la parallèle vers un axe optique (0) d'un moyen rétro-réflecteur et à être transmise par une première partie de transmission (32) d'un moyen à lentille cylindrique (3), dont le sommet (S1, S2) de lentille présente un déport (d) et à être réfléchie ensuite en retour par le moyen rétro-réflecteur, de telle sorte que la lumière laser (1) soit transmise par une deuxième partie de transmission (33) du moyen à lentille cylindrique (3) qui est différente de la première partie de transmission (32) et focalisée dans le plan de travail (5).

2. Procédé selon la revendication 1, **caractérisé en ce qu'**une ligne de crête (42, 62) du moyen rétro-réflecteur et/ou de la crête (S1, S2) de lentille du moyen à lentille cylindrique (3) est déplacée dans la trajectoire du faisceau de telle sorte que l'angle du faisceau d'entrée de la lumière laser (1) et/ou l'angle du faisceau de sortie de la lumière laser (1) puissent être réglés.

3. Procédé selon la revendication 1 ou la revendication 2, **caractérisé en ce qu'**en tant que moyen rétro-réflecteur, il est utilisé un prisme redresseur (4).

4. Procédé selon l'une quelconque des revendications 1 ou 2, **caractérisé en ce qu'**en tant que moyen rétro-réflecteur (4), il est utilisé un miroir d'inversion (6).

5. Dispositif destiné à focaliser de la lumière laser (1) dans un plan de travail, comprenant :
- un miroir de déviation (2),
- un moyen à lentille cylindrique (3), dont la cime de lentille (S1, S2) présente un déport (d) et qui comporte une première partie de transmission (32), ainsi qu'une deuxième partie de transmission (33) qui est différente de la première partie de transmission (32), ainsi
- qu'un moyen rétro-réflecteur, qui comporte un axe optique (0),
le miroir de déviation (2) étant placé dans le trajet du faisceau du dispositif de sorte à pouvoir inverser la lumière laser (1) pendant le fonctionnement du dispositif pour lui permettre de se propager sensiblement à la parallèle de l'axe optique (0) du moyen rétro-réflecteur et d'être transmise par la première partie de transmission (32) du moyen à lentille cylindrique (3) et d'être ensuite réfléchie en retour par le moyen rétro-réflecteur, de sorte que la lumière laser (1) puisse être transmise par la deuxième partie de transmission (33) du moyen à lentille cylindrique (3) et focalisée dans le plan de travail (5).

6. Dispositif selon la revendication 5, **caractérisé en ce que** le moyen rétro-réflecteur est conçu en tant que prisme redresseur (4), avec une première surface (40) de déviation de la lumière et une deuxième surface (41) de déviation de la lumière.

7. Dispositif selon la revendication 6, **caractérisé en ce qu'**entre la première surface (40) de déviation de la lumière et la deuxième surface (41) de déviation de la lumière du prisme redresseur (4) est conçue une ligne de crête (42) et **en ce que** le dispositif comprend des moyens destinés à déplacer la ligne de crête (42).

8. Dispositif selon la revendication 5, **caractérisé en ce que** le moyen rétro-réflecteur est conçu en tant que miroir d'inversion (6) avec une première surface (60) miroir et une deuxième surface (61) miroir.

9. Dispositif selon la revendication 8, **caractérisé en ce qu'**entre la première surface (60) de déviation de la lumière et la deuxième surface (61) de déviation de la lumière du miroir de dérivation (6) est conçue une ligne de crête (62) et **en ce que** le dispositif comprend des moyens destinés à déplacer la ligne de crête (62).

10. Dispositif selon l'une quelconque des revendications 5 à 9, **caractérisé en ce que** le dispositif comporte des moyens destinés à déplacer la crête de lentille (S1, S2) du moyen à lentille cylindrique (3) .
